# EUROPÄISCHE PATENTANMELDUNG

(11) **EP 2 422 980 A1**
(43) Veröffentlichungstag der Anmeldung: **29.02.2012**
(21) Anmeldenummer: 11176563.2
(22) Anmeldetag: 04.08.2011
(51) Int. Cl.: B41F 33/00, B41F 33/02, G01J 3/51

(54) **Vorrichtung zur Farbmessung in einer Rotationsdruckmachine**

(30) Priorität: 31.08.2010 DE 202010008409 U
(71) Anmelder: eltromat GmbH, 33818 Leopoldshöhe (DE)
(72) Erfinder: Völlmecke, Dirk, 33415 Verl (DE)
(74) Vertreter: TER MEER - STEINMEISTER & PARTNER GbR

(57) **Zusammenfassung**

1. Vorrichtung zur Farbmessung an fortlaufend auf eine Bedruckstoffbahn (10) gedruckten Formaten (16) in einer Rotationsdruckmaschine, mit einer auf die Bedruckstoffbahn (10) gerichteten Kamera (28, 30) und einer Steuereinrichtung (26), die die Kamera mit dem Repeat der Druckmaschine synchronisiert, dadurch **gekennzeichnet**, dass die Kamera (28, 30) eine Schwarzweiß-Kamera ist, der ein Filterwechsler (32) zugeordnet ist, mit dem unterschiedliche Farbfilter (36) in den optischen Pfad (38) der Kamera gebracht werden können, dass die Steuereinrichtung (26) dazu ausgebildet ist, den Filterwechsler (32) so mit dem Repeat zu synchronisieren, dass aufeinanderfolgende Formate (16) mit aufeinanderfolgenden Farbfiltern (36) aufgenommen werden, und dass eine Auswerteeinrichtung (42) dazu vorgesehen ist, aus den mit verschiedenen Farbfiltern (36) aufgenommenen Bilddaten ein Farbspektrum (50) zu synthetisieren.

## Beschreibung

Die Erfindung betrifft eine Vorrichtung zur Farbmessung an fortlaufend auf eine Bedruckstoffbahn gedruckten Formaten in einer Rotationsdruckmaschine, mit einer auf die Bedruckstoffbahn gerichteten Kamera und einer Steuereinrichtung, die die Kamera mit dem Repeat der Druckmaschine synchronisiert.

In der Druckindustrie ist man darum bemüht, den Druckprozess so zu steuern, dass die auf dem Druckerzeugnis sichtbaren Farben möglichst exakt den Vorstellungen des Auftraggebers entsprechen, d.h., möglichst genau mit den Farben auf einem vom Auftraggeber bereitgestellten oder genehmigten Proof übereinstimmen.

Aus EP 1 457 335 A ist eine Vorrichtung bekannt, die es erlaubt, das Druckbild bei laufender Produktion mit einer in die Druckmaschine integrierten elektronischen Farbkamera zu überwachen. Die Kamera wird in der Richtung quer zur Bedruckstoffbahn so positioniert und zeitlich so gesteuert, dass sie in jedem gedruckten Format, das an der Kamera vorbeiläuft, einen ausgewählten, als besonders kritisch angesehenen Bildbereich aufnimmt. Die Kamera weist drei Farbkanäle, R, G und B auf, so dass man für jedes von der Kamera aufgenommene Pixel einen RGB-Farbwert erhält, der dann mit einem entsprechenden Farbwert auf dem Proof verglichen werden kann. Falls sich beim Andrucken zeigt, dass nicht der korrekte Farbeindruck erzielt wurde, kann die Farbzusammensetzung in den Farbwerken der Druckmaschine korrigiert werden. Im Prinzip ist es auch möglich, den gesamten Produktionsprozess mit der Kamera zu überwachen, so dass auch eingegriffen werden kann, falls Farbfehler erst im Laufe der Produktion auftreten.

Mit den drei Farbkanälen einer RGB-Kamera ist es jedoch nicht immer möglich, den Farbeindruck, den das menschliche Auge wahrnimmt, korrekt zu erfassen. Strenggenommen ist für den vom Menschen wahrgenommenen Farbeindruck das gesamte Spektrum des von der Bildoberfläche zurückgestreuten Lichts von Bedeutung. Allerdings weist auch das menschliche Auge letztlich nur drei Typen von Sinneszellen auf, die sich in ihrer spektralen Empfindlichkeit unterscheiden. Daher ist es möglich, eine Farbe durch ihren Ort in einem dreidimensionalen Farbraum zu spezifizieren, beispielsweise in einem standardisierten Lab-Farbraum, der an die menschliche Sinneswahrnehmung besonders gut angepasst ist. Da jedoch die spektrale Empfindlichkeit der R, G und B-Kanäle einer Farbkamera nicht mit den spektralen Empfindlichkeiten der Sinneszellen im menschlichen Auge übereinstimmt, lässt sich der Lab-Farbwert mit einer RGB-Kamera nicht immer korrekt bestimmen.

In der oben genannten Druckschrift wird auch bereits die Möglichkeit erwähnt, mehr als drei Farbkanäle zu verwenden. Das würde jedoch die Komplexität des Kamerasystems und auch den nötigen Datenverarbeitungsaufwand beträchtlich erhöhen. Die Auswertung der Farbdaten wird weiter dadurch erschwert, dass die von den Druckzylindern der Druckmaschine nacheinander auf die Bedruckstoffbahn gedruckten Bilder (Formate) einander nicht völlig gleichen, da die maßgeblichen Parameter des Druckprozesses gewissen statistischen Schwankungen unterliegen. Darüber hinaus können beim Aufnehmen des Bildes auch Schwankungen in den Beleuchtungsverhältnissen auftreten, und schließlich tritt auch in den fotoelektrischen Elementen der Kamera ein gewisses Rauschen auf. Diese Effekte führen dazu, dass die in aufeinanderfolgenden Formate für dasselbe Pixel erhaltenen Farbwerte beträchtlich schwanken können, so dass eine statistische Mittelwertbildung erforderlich ist.

Aufgabe der Erfindung ist es, eine Vorrichtung zu schaffen, die es mit geringem Aufwand ermöglicht, den von einem Menschen tatsächlich wahrgenommenen Farbeindruck genauer wiederzugeben.

Diese Aufgabe wird dadurch gelöst, dass die Kamera eine Schwarzweiß-Kamera ist, der ein Filterwechsler zugeordnet ist, mit dem unterschiedliche Farbfilter in den optischen Pfad der Kamera gebracht werden können, dass die Steuereinrichtung dazu ausgebildet ist, den Filterwechsler so mit dem Repeat zu synchronisieren, das aufeinanderfolgende Formate mit aufeinanderfolgenden Farbfiltern aufgenommen werden, und dass eine Auswerteeinrichtung dazu vorgesehen ist, aus den mit verschiedenen Farbfiltern aufgenommenen Bilddaten ein Farbspektrum zu synthetisieren.

Durch die Verwendung einer Schwarzweiß-Kamera in Verbindung mit einem Filterwechsler wird die Möglichkeit geschaffen, mit geringem apparativem Aufwand ein Bild in einer im Prinzip beliebig großen Anzahl von Farbkanälen aufzunehmen und zu analysieren. Ein einzelnes Format auf der Bedruckstoffbahn wird dabei jeweils nur mit einem einzigen Farbfilter aufgenommen. In der Zeit, in der die Bedruckstoffbahn weiterläuft, bis der ausgewählte Bildbereich in dem nächsten Format die Position der Kamera erreicht hat, wird mit Hilfe des Filterwechslers ein anderes Filter in Position gebracht, so dass das nächste Bild mit dem nächsten Filter aufgenommen wird. Nachdem eine der Anzahl der Farbfilter entsprechende Anzahl von Formaten aufgenommen worden ist, erhält man so ein Spektrum, das den gesamten Bereich des sichtbaren Lichts abdecken kann und dessen spektrale Auflösung durch die Zahl der verwendeten Filter bestimmt ist. Dieses Spektrum ist allerdings nicht für ein einzelnes Bild (Format) repräsentativ, sondern stellt gewissermaßen eine "Quersumme" aus einer Vielzahl von Formaten dar. Dies erweist sich jedoch nicht als Nachteil, sondern im Gegenteil als vorteilhaft, weil dadurch schon bei der Aufnahme des Spektrums eine gewisse Mittelwertbildung erreicht wird und somit statistische Schwankungen geglättet werden.

Vorteilhafte Ausgestaltungen und Weiterbildungen der Erfindung sind in den Unteransprüchen angegeben.

In einer Ausführungsform weist der Filterwechsler fünfunddreißig verschiedene Farbfilter, beispielsweise Interferenzfilter auf, die jeweils eine Bandbreite von 10 nm haben und zusammen den visuellen Spektralbereich von 380 nm bis 730 nm abdecken.

Im folgenden wird ein Ausführungsbeispiel anhand der Zeichnung näher erläutert.

Es zeigen.
- Fig. 1: eine Prinzipskizze der erfindungsgemäßen Vorrichtung in einer Rotationsdruckmaschine;
- Fig. 2: eine Ansicht eines in der Vorrichtung eingesetzten Filterwechslers; und
- Fig. 3: eine Graphik zur Illustration der Wirkungsweise der Vorrichtung.

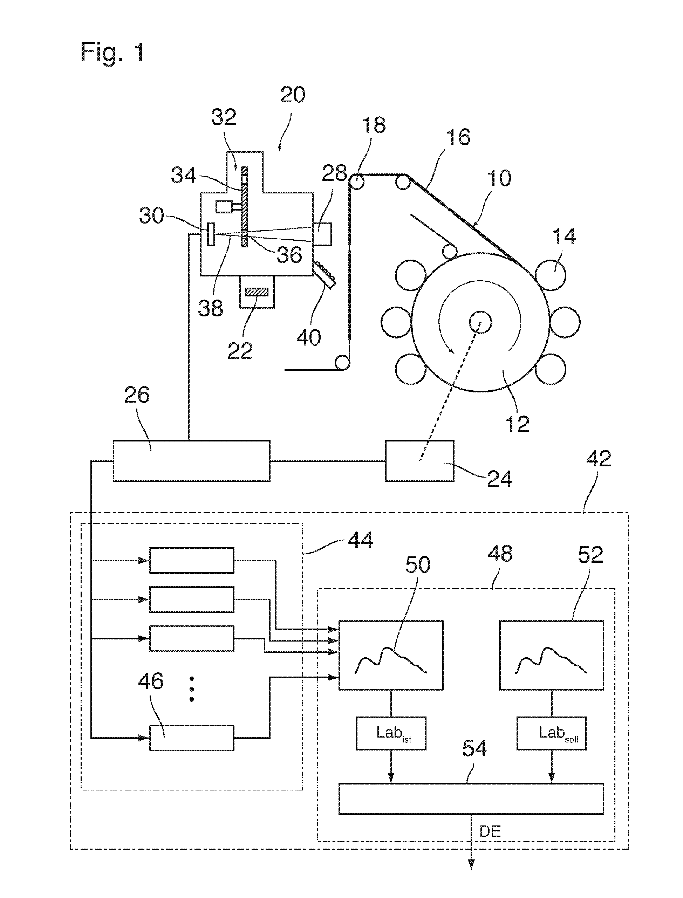

In Fig. 1 ist schematisch ein Abschnitt eines Weges gezeigt, den eine Bedruckstoffbahn 10 in einer Rotationsdruckmaschine durchläuft. Die Bedruckstoffbahn umschlingt einen Zentralzylinder 12, an dessen Umfangsfläche Druckzylinder 14 von sechs Farbwerken angestellt sind, so dass beim Umlauf der Bedruckstoffbahn um den Zentralzylinder 12 nacheinander sechs Farbauszugsbilder registergerecht übereinander gedruckt werden. Bei jeder Umdrehung der Druckzylinder 14 wird auf diese Weise ein Bild auf die Bedruckstoffbahn 10 gedruckt, und bei fortgesetztem Betrieb der Druckmaschine erhält man auf der Bedruckstoffbahn eine Folge von aufeinanderfolgenden, sich wiederholenden Bildern, den sogenannten Formaten 16. Die Bedruckstoffbahn 10 wird dann über Umlenkrollen 18 an einem Kamerasystem 20 vorbeigeführt, mit dem ausgewählte Bildbereiche jedes Formats aufgenommen werden können.

Im gezeigten Beispiel ist das Kamerasystem 20 beweglich auf einer Traverse 22 montiert, die sich über die gesamte Breite der Bedruckstoffbahn 10 erstreckt, so dass jede gewünschte Bildposition auf der Bedruckstoffbahn angefahren werden kann.

Ein mit dem Antriebssystem der Druckmaschine gekoppelter Geber 24 liefert ein Wegsignal an eine Steuereinheit 26, die den Betrieb des Kamerasystems 20 steuert. Das Wegsignal des Gebers 24 repräsentiert den von jedem der Druckzylinder 14 zurückgelegten Drehwinkel sowie den Drehwinkel, bei dem ein neues Format 16 beginnt. Anhand der bekannten Weglängen längs des Weges der Bedruckstoffbahn lässt sich so die Bewegung der Formate 16 relativ zum Kamerasystem 20 verfolgen.

Im gezeigten Beispiel ist Kamerasystem dazu eingerichtet, einen ausgewählten Bildausschnitt des Formats (ein Messfeld) zu aufzunehmen. Dieses Messfeld hat beispielsweise eine Größe von 6 mm x 2,5 mm, erstreckt sich also im Vergleich zur Breite der Bedruckstoffbahn 10 (beispielsweise 520 mm) über eine relativ kleine Fläche. Zur Auswahl des Messfeldes wird das Kamerasystem in die entsprechende Position gefahren, und die Aufnahmezeiten werden durch die Steuereinrichtung 26 anhand des vom Geber 24 gelieferten Wegsignals so gesteuert, dass in jedem Format derselbe Bildausschnitt aufgenommen wird.

In einer anderen Ausführungsform kann das Kamerasystem auch eine Vielzahl über die Breite der Bedruckstoffbahn verteilter Kameramodule (Zeilenkameras) aufweisen, deren Bildfelder einander überlappen, so dass im Prinzip die gesamte Breite der Bedruckstoffbahn aufgenommen werden könnte. Die Auswahl der Messfelder erfolgt dann durch Auswahl der von den Modulen gelieferten Bilddaten für die weitere Auswertung.

Das Kamerasystem 20 enthält eine Schwarzweiß-Kamera mit einem Objektiv 28 und einem elektronischen Bildsensor 30. Da sich die Formate 16 an dem Objektiv 28 vorbeibewegen, kann der Bildsensor 30 durch eine einzelne CCD-Zeile gebildet werden, die sich in Querrichtung der Bedruckstoffbahn erstreckt und mit der der ausgewählte Bildbereich abgescannt werden kann.

Zu dem Kamerasystem 20 bzw. zu jedem Modul gehört weiterhin ein Filterwechsler 32 mit einer drehantreibbaren Filterscheibe 34, mit der sich unterschiedliche Farbfilter 36 in dem Strahlengang 38 der Kamera bringen lassen.

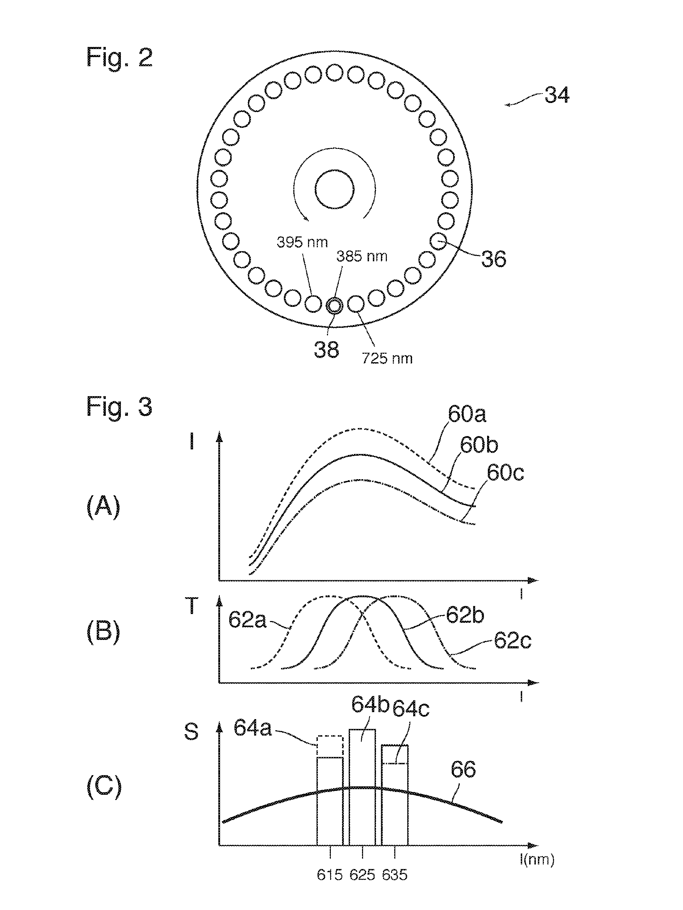

In Fig. 2 ist die Filterscheibe 34 in einer Frontansicht gezeigt. Man erkennt fünfunddreißig Farbfilter 36, die in gleichmäßigen Winkelabständen auf einem Kreis angeordnet sind. Die Farbfilter werden beispielsweise durch Interferenzfilter gebildet und haben jeweils eine Bandbreite von etwa 10 nm und decken den Spektralbereich von 680 bis 730 nm ab. In dem in Fig. 2 gezeigten Zustand befindet sich der Farbfilter für die kleinste Wellenlänge (385 nm) im Strahlengang 38. In Drehrichtung der Filterscheibe folgt dann ein Filter mit einer Mitten-Wellenlänge von 395 nm, usw. bis 725 nm.

Über die Kameraelektronik wird der Filterwechsler 32 so angesteuert, dass jedes Mal um einen Filter weitergeschaltet wird, wenn ein ausgewählter Bildausschnitt auf einem Format 16 aufgenommen wurde. Nach fünfunddreißig Formaten kann so ein neuer Aufnahmezyklus beginnen. Die Zeit, in der sich die Bedruckstoffbahn 10 um die Länge eines Formats 16 weiterbewegt, wird für den mechanischen Filterwechsel genutzt. Dabei kann die Bahngeschwindigkeit der Bedruckstoffbahn bis zum 600 m/min betragen. Bei typischen Bahngeschwindigkeiten (mindestens 25 m/min) liegt die für einen vollständigen Messzyklus benötigte Zeit höchstens in der Größenordnung von 30 Sekunden.

Dem Kamerasystem 20 ist eine Beleuchtungseinrichtung 40 zugeordnet, die eine gleichmäßige Beleuchtung des von der Kamera aufgenommenen Bildbereichs sicherstellt.

Die vom Kamerasystem aufgenommenen Bilddaten werden in einer elektronischen Auswerteeinrichtung 42 weiter ausgewertet. Die Auswerteeinrichtung enthält einen Bildserver 44 mit fünfunddreißig Bildspeichern 46, die jeweils das Bild speichern, das mit einem der Farbfilter in dem betreffenden Messzyklus aufgenommen wurde.

Wenn das Kamerasystem 20 durch Zeilenkameras gebildet wird, so wird bevorzugt das komplette Format aufgenommen und in den Bildspeichern 46 gespeichert. Die Auswahl des Messfelds oder der Messfelder kann dann bei laufendem Betrieb flexibel geändert werden, ohne dass mechanische Einstellungen verändert werden müssen. Die Inhalte der Bildspeicher 46 werden nach dem Rotationsprinzip in Zyklen von je 35 Formaten erneuert.

Anhand der gespeicherten Daten kann dann in einem Farbmetrik-Server 48 für jedes Pixel des Messfelds ein Spektrum 50 synthetisiert werden. Die Pixel haben in dem hier betrachteten Beispiel eine Größe von etwa 0,5 x 0,5 mm. Wahlweise kann jedoch auch mit einer höheren Bildauflösung gearbeitet werden. Zur Unterdrückung des Farbrauschens kann dann ggf. bei der Erstellung der Spektren über mehrere benachbarte Pixel gemittelt werden. Aus dem Spektrum wird dann ein zugehöriger Farbwert (Labᵢₛₜ) in einem geeignet standardisierten Farbraum berechnet, beispielsweise im L*a*b*-Farbraum oder im LCh-Farbraum. Außerdem können Spektralauszüge in verschiedenen Lichtarten berechnet werden. Diese Daten ermöglichen eine absolute Farbmessung.

In entsprechender Weise können in dem Farbmetrik-Server 48 auch die Farbwerte (Labₛₒₗₗ) eines eingescannten Proofs 52 berechnet werden. In einer Vergleichsstufe 54 kann dann (z.B. pixelweise) die Abweichung ΔE zwischen dem Soll-Farbwert und dem Ist-Farbwert berechnet werden. Wenn diese Abweichung innerhalb zulässiger Grenzen liegt, kann der Druckvorgang fortgesetzt werden. Wenn sich unzulässige Abweichungen zeigen, muss ggf. der Druckprozess abgebrochen und die Farbzusammensetzung nachjustiert werden.

Es ist zu beachten, dass das Spektrum 50 nicht die Farbe eines realen Bildausschnitts auf einem der Formate 16 wiedergibt, sondern aus Bilddaten von insgesamt fünfunddreißig Formaten zusammengesetzt ist. Das Spektrum ist somit in fünfunddreißig Farbkanäle aufgeteilt, und der Wert in jedem Farbkanal stammt von einem anderen der gedruckten Formate. Das ermöglicht es, statistische Schwankungen von Format zu Format auszugleichen und zu vermeiden, dass allein aufgrund solcher Schwankungen unzulässig große Abweichungen ΔE gemeldet werden, obwohl die Farbqualität des Bildes durchaus akzeptabel ist. Dies soll im folgenden anhand der Fig. 3 illustriert werden.

Fig. 3 ist die Intensität I des von einem einzelnen Format 16 zurückgestreuten Lichts gegen die Wellenlänge λ aufgetragen. Gezeigt ist hier nur ein relativ kleiner Ausschnitt des sichtbaren Spektrums in der Umgebung der Wellenlänge λ = 625 nm. Die Kurven 60a, 60b und 60c geben jeweils den spektralen Intensitätsverlauf für drei aufeinanderfolgende Formate an. Aufgrund statistischer Schwankungen sind die Kurven etwas unterschiedlich, obgleich sie denselben Bildpunkt betreffen. Als Beispiel soll angenommen werden, dass sich bei einer statistischen Mittelung über sehr viele Formate der Intensitätsverlauf ergäbe, der durch die in durchgezogenen Linien eingezeichnete Kurve 60b wiedergegeben wird.

Fig. 3(B) zeigt Transmissionskurven 62a, 62b und 62c dreier aufeinanderfolgender Farbfilter 36, nämlich der Filter, die ihr Transmissionsmaximum bei 615 nm (Farbkanal von 610 bis 620 nm), 625 nm (620 bis 630 nm) bzw. 635 nm (630 bis 640 nm) haben. Das Format, zu dem die Intensitätskurve 60a gehört, wird mit dem Filter aufgenommen, zu dem die Transmissionskurve 62a gehört. Entsprechendes gilt für die Kurvenpaare 60b, 62b und 60c, 62c.

In Fig. 3(C) ist ein entsprechender Ausschnitt des aus den aufeinanderfolgenden Messungen synthetisierten Spektrums als Balkendiagramm dargestellt. Der (gestrichelt eingezeichnete) Balken 64a gibt den Spektralwert in dem Farbkanal mit der Mitten-Wellenlänge 615 nm an. Man erhält diesen Wert, indem man das Produkt aus der durch die Kurve 60a repräsentierten Intensität und der durch die Kurve 62a repräsentierten Transmissivität über die Wellenlänge λ integriert. Entsprechendes gilt für die Balken 64b und 64c in Fig. 3C. Zum Vergleich sind in Fig. 3(C) in durchgezogenen Linien auch die entsprechenden Balken dargestellt, die man erhielte, wenn die Messungen keinen statistischen Schwankungen unterlägen, d.h., wenn der Intensitätsverlauf bei allen drei Messungen durch die Kurve 60b repräsentiert wäre (und außerdem die Beleuchtungsbedingungen gleich wären und das Kamera-Rauschen vernachlässigbar wäre). Man erkennt, dass die Balken 64a und 64c von dem entsprechenden statistischen Mittelwert abweichen.

Die Farbwerte oder Koordinaten in Lab-Farbraum werden aus dem gesamten Spektrum 50 berechnet, das sich über den Wellenlängenbereich von 380 bis 730 nm erstreckt. Dabei gehen die einzelnen Farbkanäle mit unterschiedlichen Gewichten in die betreffende Farbraumkoordinate ein. Als Beispiel zeigt die Kurve 66 in Fig. 3(C) die Gewichtsverteilung für eine der drei Farbraumkoordinaten. Da die in Fig. 3(C) gezeigten Farbkanäle einander unmittelbar benachbart sind, gehen sie mit annähernd gleichen Gewichten in die Lab-Farbwerte ein. Der auf statistischen Schwankungen beruhende "Überschuss" des Balkens 64a wird deshalb weitgehend durch ein entsprechendes Defizit bei dem Balken 64c kompensiert, so dass die letztlich erhaltenen Lab-Werte nur wenig von den Werten abweichen, die man bei einem idealen, auf den statischen Mittelwerten beruhenden Spektrum erhielte. Bei der Berechnung des ΔE in der Vergleichsstufe 54 sind deshalb statische "Ausreißer" bereits weitgehend eliminiert, so dass eine unzulässige Farbabweichung nur dann angezeigt wird, wenn die Farben auf dem Bedruckstoff signifikant von den durch den Proof 52 festgelegen Werten abweichen.

## Patentansprüche

1. Vorrichtung zur Farbmessung an fortlaufend auf eine Bedruckstoffbahn (10) gedruckten Formaten (16) in einer Rotationsdruckmaschine, mit einer auf die Bedruckstoffbahn (10) gerichteten Kamera (28, 30) und einer Steuereinrichtung (26), die die Kamera mit dem Repeat der Druckmaschine synchronisiert, **dadurch gekennzeichnet, dass** die Kamera (28, 30) eine Schwarzweiß-Kamera ist, der ein Filterwechsler (32) zugeordnet ist, mit dem unterschiedliche Farbfilter (36) in den optischen Pfad (38) der Kamera gebracht werden können, dass die Steuereinrichtung (26) dazu ausgebildet ist, den Filterwechsler (32) so mit dem Repeat zu synchronisieren, dass aufeinanderfolgende Formate (16) mit aufeinanderfolgenden Farbfiltern (36) aufgenommen werden, und dass eine Auswerteeinrichtung (42) dazu vorgesehen ist, aus den mit verschiedenen Farbfiltern (36) aufgenommenen Bilddaten ein Farbspektrum (50) zu synthetisieren.

2. Vorrichtung nach Anspruch 1, bei der der Filterwechsler (32) mehr als drei verschiedene Farbfilter (36) aufweist.

3. Vorrichtung nach Anspruch 2, bei der der Filterwechsler (32) mehr als 15 verschiedene Farbfilter (36) aufweist.

4. Vorrichtung nach einem der vorstehenden Ansprüche, bei der die Auswerteeinrichtung (42) dazu ausgebildet ist, aus dem synthetisierten Farbspektrum (50) einen Farbwert (Lab) in einem dreidimensionalen Farbraum zu berechnen.
